# EUROPEAN PATENT APPLICATION

(11) **EP 4 663 610 A1**
(43) Date of publication of application: **17.12.2025**
(21) Application number: 24181278.3
(22) Date of filing: 11.06.2024
(51) Int. Cl.: C02F 1/72, B01J 35/33, C02F 1/34, C02F 101/36, C02F 103/06

(54) **CATALYST DEVICE AND METHOD FOR DEGRADING ORGANIC POLLUTANTS IN WATER**

(71) Applicant: Oxyle AG, 8952 Schlieren (CH)
(72) Inventor: Waranicki, Taras, 8047 Zurich (CH); Zlobinski, Mateusz, 8856 Tuggen (CH); Nizar, Ahmed, 8047 Zurich (CH); Staufert, Silvan, 8620 Wetzikon (CH)
(74) Representative: Prins Intellectual Property AG

(57) **Abstract**

A catalyst device (1) for degrading organic pollutants, in particular perfluorinated alkyl substances (PFAS), in water comprising a fluid inlet (2), a fluid outlet (3), a first fluid chamber (8) fluidly connected with the fluid inlet (2), and a catalyst chamber (6) fluidly connected with the fluid outlet (3); wherein the catalyst chamber (6) is filled with a granular piezoelectric catalyst; wherein a separating wall (81) provided with a plurality of through holes (53) separates the first fluid chamber and the catalyst chamber (6), wherein the plurality of through holes (53) are distributed over the separating wall (81) creating a turbulent flow of water through the catalyst chamber (6) towards the fluid outlet (3) for activation of the piezoelectric catalyst.

## Description

### Technical Field

The invention relates to a catalyst device and catalyst device arrangement for degrading pollutants, in particular perfluorinated alkyl substances (PFAS), in water and a method for processing polluted water with said catalyst device.

### Technical Background

The present invention is utilized in the field of water treatment, in particular in the removal of organic pollutants (so called trace- or micropollutants) from polluted water, where said organic pollutants are degraded or destroyed. More than 100'000 of such harmful organic pollutants are known of today. A class of particular concern are perfluorinated alkyl substances (PFAS), consisting of approximately 10'000 different distinct compounds. These compounds are harmful to humans and the ecosystem even if they're present at very low concentrations in the water. Hence, regulators like the US EPA are seeking to impose allowable levels of PFAS in e.g. drinking water as low as 4 parts per trillion (ppt or ng/L) for specific compounds. In the European Union, regulators are enforcing a 100ppt discharge limit for the sum of some 20+ PFAS on industrial plants or for the remediation projects.

Existing methods that are used to degrade organic pollutants involve electrochemical processes (typically termed advanced oxidation process or advanced reduction process, AOP and ARP respectively). These processes rely on the use of radical species such as hydroxyl radicals or aqueous electrons. The three major pathways to generate said radicals are through chemical reaction (e.g. UV/H2O2 or H2O2 catalysis on TiO2), through photocatalysis, or through direct electrolysis using immersed electrodes. However, these methods are ineffective as they are only capable of treating a limited range of the > 100'00 organic pollutants; they consume a significant amount of chemicals and/or electricity incurring high cost as a result; they have limited applicability in water polluted by secondary pollutants (i.e. high turbidity).

For PFAS destruction in particular, several methods to degrade organic pollutants are being investigated and commercialized. Most commonly, electrochemical oxidation through direct electrolysis of immersed electrodes is employed with a typical energy use of 10 to 50 kWh/m3 of polluted water. Other emerging technologies such as supercritical water oxidation, hydrothermal oxidation or ultrasonic cavitation in combination with piezoelectric elements (such as US2013026108A1) use even more energy, typically >100kWh/m3.

These shortcomings can be addressed by assemblies and methods for treating polluted water; and in particular assemblies and methods in which a piezoelectric element is strained as to generate transient electric charges on a surface of said piezoelectric element, and wherein said generated electric charges cause redox reactions (AOP and ARP) which degrade pollutants in the polluted water (see WO2022167915 A1 by the same applicant).

### Summary of the Invention

It is an objective of the invention to provide a catalyst device for efficiently treating polluted water with maximized reaction rates while reducing the overall energy consumption. It is another objective that the catalyst device is easy to maintain, to replace and to produce cost-efficiently.

At least one of the objectives of the present invention is achieved by a catalyst device according to claim 1, a catalyst device arrangement according to claim 12 and a method according to claim 14.

The catalyst device for degrading organic pollutants, in particular perfluorinated alkyl substances (PFAS), in water comprises a fluid inlet, a fluid outlet, a first fluid chamber fluidly connected with the fluid inlet, and a catalyst chamber fluidly connected with the fluid outlet. The catalyst chamber is filled with a granular piezoelectric catalyst. A separating wall provided with a plurality of through holes separates the first fluid chamber and the catalyst chamber. The plurality of through holes are distributed over the separating wall creating a turbulent flow of water through the catalyst chamber towards the fluid outlet for activation of the piezoelectric catalyst.

In use, polluted water flows through the fluid inlet into the first chamber and then enters the catalyst chamber through the plurality of through holes, which are distributed over a large area of the catalyst chamber. The water is thereby evenly distributed over the entire bed of piezoelectric catalyst. Thus, the arrangement and dimensions of the through holes is such that a uniformly distributed but turbulent flow is generated that transports the water through the bed of piezoelectric catalyst towards the fluid outlet on the outer tube, which contrasts with any filtration/absorption column, where a laminar flow is required to increase absorption rates.

The piezoelectric catalyst is activated through the piezoelectric effect (i.e. mechanical stress is applied to trigger an electrochemical reaction) by subjecting the piezoelectric catalyst to a turbulent flow of a water at sufficient fluid velocities. The catalyst device allows the delivery of water to the piezoelectric catalyst, while minimizing the pressure losses in the system. The bed of piezoelectric catalyst thereby experiences a uniform distribution of force/vibrations for its activation.

The force/vibration experienced by the piezoelectric catalyst causes it to be strained and the said strain caused in the piezoelectric catalyst gives rise to the generation of transient electric charges on the surface of said piezoelectric catalyst. These transient electric charges on the surface of said piezoelectric catalyst cause the formation of reactive radical species, such as hydroxyl or superoxide radicals for example, on the surface of the piezoelectric catalyst (these reactive radical species may be formed using oxygen taken from water molecules of the polluted water). The reactive radical species react with pollutants in the polluted water which are in contact with the surface of the piezoelectric catalyst and/or which are in close proximity to the piezoelectric catalyst. The reactions between the reactive radical species and pollutants are redox reactions. The redox reactions between the reactive radical species and pollutants degrade the pollutants in the polluted water.

To run an efficient process, the piezoelectric catalyst is packed within the catalyst chamber to maximize the reaction rates. While increasing the mass of the piezoelectric catalyst increases the reaction rate, a too dense packing increases also the stiffness of the bed of piezoelectric catalyst resulting in lower deformation of the piezoelectric catalyst and hence reduce activation of the piezoelectric catalyst.

Further embodiments of the invention are set forth in the dependent claims.

In some embodiments the catalyst device may comprise an outer tube with a first end and an opposite second end and an inner tube with a first end and an opposite second end. The inner tube then defines the first fluid chamber and is arranged concentric within and spaced apart from the outer tube. The catalyst chamber is defined by the space between the outer tube and the inner tube. The inner tube extends along the outer tube, is closed at the second end, and the through holes are radially distributed over the length of the inner tube. In use, polluted water flows through the fluid inlet into the inner tube and then enters the catalyst chamber through the plurality of radial through holes evenly distributed over the entire bed of piezoelectric catalyst.

In some embodiments the outer tube may be fluidly connected to the fluid outlet and the inner tube may be fluidly connected to the fluid inlet.

In some embodiments the catalyst device may have a first end and an opposite second end, wherein the fluid inlet and the fluid outlet are arranged at the same end of the catalyst device or at opposite ends of the catalyst device. The first end of the device may be an upper end and the second end may be a lower end of the device, when in operation.

In some embodiments the catalyst chamber or the outer tube may include a perforated retainer plate upstream of the fluid outlet defining a perforated wall of the catalyst chamber. The retainer plate may have the size of the inner diameter of the outer tube. Sufficient space may be provided between the retainer plate and the fluid outlet to minimize pressure losses.

In some embodiments the outer tube may be closed at the second end with a removable cap accommodating the fluid inlet and holding the inner tube.

In some embodiments the through holes may be sized and the flow rate through the catalyst device adjusted to obtain a fluid nozzle velocity of 0.5 to 6 m/s.

In some embodiments the through holes may have a diameter in the range of 0.1 to 3 mm and are spaced apart in longitudinal direction by less than 50 mm and/or the radial distance between the inner tube and the outer tube is in the range of 5 to 50 cm.

In some embodiments the ratio of the total cross-sectional area of all through holes to the cross-sectional area of the inner tube is between 0.2 to 2.

In some embodiments the piezoelectric catalyst may be packed in the catalyst chamber with 50 to 150 grams of piezoelectric catalyst per litre of volume of the catalyst chamber.

In some embodiment the piezoelectric catalyst comprises a composite material comprising a matrix which comprises a polymeric material, and piezoelectric particles embedded in the matrix. Preferably, the polymeric matrix comprises one or more of the following poly(vinylidene fluoride) PVDF, poly(vinylidene fluoride-co- trifluoroethylene) PVDF-TrFE, poly(vinylidene fluoride-co-trifluoroethylene- co-chlorofluoroethylene) PVDF-TrFE-CFE, Poly(vinylidene fluoridehexafluoropropylene) PVDF-HFP, Poly(vinylidene fluoridebromotrifluoroethylene) PVDF-BTFE, poly(L-lactic acid) PLLA, Polyarcrylonitril (PAN), poly(a-hydroxy acid) PAHA, Nylon-7 or Nylon-11. Preferably, the piezoelectric particles which are embedded in the matrix comprise one or more of Barium-Calcium-Zirconate-Titanate (BCZT), Barium-Calcium-Titanate (BCT), potassium-sodium niobate (KNN), Lithium- Niobiate (LiNbO3), Lead-zirconate-titanate (PZT), Zinc-Oxide (ZnO), Barium- Titanate (BaTiO3), Bismuth Ferrite (BiFeO3). Most preferably the piezoelectric particles which are embedded in the matrix have a diameter size between 10nm - 50nm or between 10nm - 100nm; most preferably the piezoelectric particles have a diameter size of about 10nm.

In some embodiments the granular piezoelectric catalyst may have a particle size in the range of 3 to 20 mm.

In some embodiments the piezoelectric catalyst may be porous and/or has a porous surface. The piezoelectric catalyst may have a porosity of 50 to 95 % and/or a macroscopic young's modulus of 10 to 500 MPa.

The granular piezoelectric catalyst may be configured to be easily deformed by a turbulent flow of polluted water. Preferably, the piezoelectric catalyst comprises an elastic material with a macroscopic young's modulus between 10 MPa and 500 MPa, allowing the piezoelectric catalyst to be deformed by the turbulent flow of the polluted water around it. The piezoelectric catalyst is strained by 0.01% to 1% without causing damage or permanent deformation of the granular piezoelectric catalyst.

Preferably, the piezoelectric catalyst is porous and/or has a porous surface. Advantageously a piezoelectric catalyst which is porous and/or has a porous surface increases the contact area of the piezoelectric catalyst thus enabling a greater volume of the polluted water to come into contact with the piezoelectric catalyst in a shorter time. It should be noted that, in the present invention, it is not necessary for the polluted water to permeate through the piezoelectric catalyst in order to degrade pollutants in the polluted water.

In some embodiments a longitudinal axis of the through holes may be at an angle of 0 to 70 degrees to a perpendicular of the separating wall, preferably 30 to 70 degrees. Angled through holes may lead to enhanced catalyst activation.

In some embodiments at least one guide blade is arranged within the catalyst chamber to redirect the flow of water. Guide blades may be placed every approx. 30 mm in a longitudinal direction. The guide blades may lead to enhanced catalyst activation.

The invention further relates to a catalyst device arrangement comprising a catalyst device as described above and means for introducing gas into the water upstream of the fluid inlet or the first chamber to generate a fluid with a gas-water ratio of 0.05 to 0.8. An optimal gas-water ratio results in optimized catalyst activation while keeping energy losses due to increased compressibility of the gas-water mixture low. The through holes in the separating wall or the inner tube will help to break up the gas bubbles, delivering a fluid stream with fine bubbles that penetrate deep into the bed of piezoelectric catalyst, thereby providing homogenous activation of the piezoelectric catalyst.

In some embodiments the means for introducing gas may be a venturi injector.

In some embodiments the introduced gas may be pressurized gas or gas / air taken from the environment.

In some embodiments pressurized gas may be directly introduced or via the venturi injector.

In some embodiments the means for introducing gas may be arranged upstream of a single catalyst device or upstream of several catalyst devices fluidly arranged in parallel.

The invention further relates to a method for degrading organic pollutants, in particular perfluorinated alkyl substances (PFAS), in water using a catalyst device as described above. The method comprises the steps of (a.) feeding polluted water through the fluid inlet into the first fluid chamber, (b.) evenly distributing the polluted water through the plurality of through holes over the catalyst chamber to generate a turbulent flow towards the fluid outlet for activation of the piezoelectric catalyst, (c.) degrading the organic pollutant via the catalytic reaction of the piezoelectric catalyst while the water flows towards the fluid outlet.

In some embodiments the water may be enriched with gas upstream of the fluid inlet or the first chamber to generate a fluid with a gas-water ratio of 0.05 to 0.5 in order to provide optimal catalyst activation while maintaining low energy consumption. This range may be used to provide optimal reaction efficiency i.e. activation of the piezoelectric catalyst.

In some embodiments the water may be enriched with gas upstream of the fluid inlet or the first chamber to generate a fluid with a gas-water ratio of 0.6 to 0.8 in order to provide heavy shaking and activation of the catalyst such that blockages due to compacting of the catalyst are reverted. These procedure to revers clogging of the catalyst bed may be performed during short time intervals.

In some embodiments the flow of water is continuous. The flow rate may be constant or vary of time in predefined intervals.

### Brief Explanation of the Figures

The invention is described in greater detail below with reference to embodiments that are illustrated in the figures. The figures show:
- Fig. 1: a sectional view a catalyst device;
- Fig. 2: a perspective and partially sectional view of the catalyst device of Fig. 1;
- Fig. 3: schematic diagrams of a catalyst device arrangement with means for introducing gas;
- Fig. 4: a graph showing the degradation rate of the of the treatment of polluted groundwater with a pollutant load of 2500 ng/L PFAS;
- Fig. 5: a cross section of an inner tube with angled through holes;
- Fig. 6: a perspective and partially sectional view of the catalyst device with guide blades.

### Embodiments of the Invention

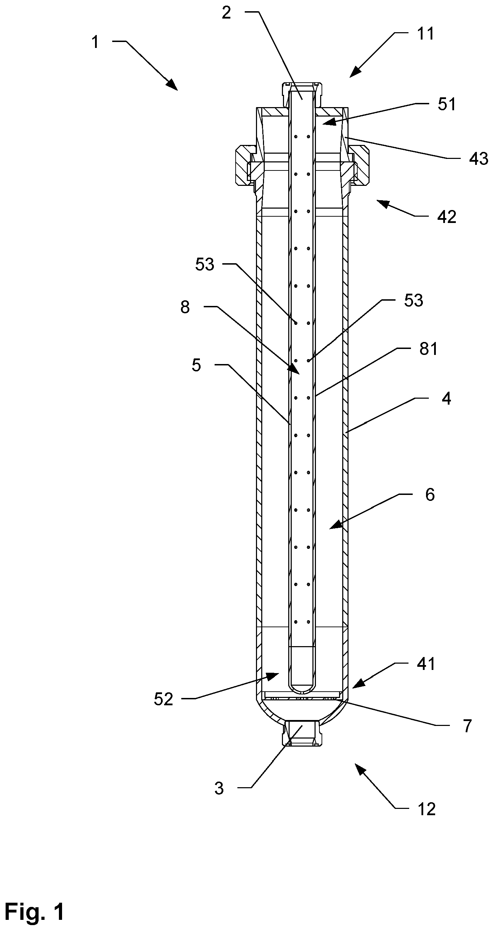

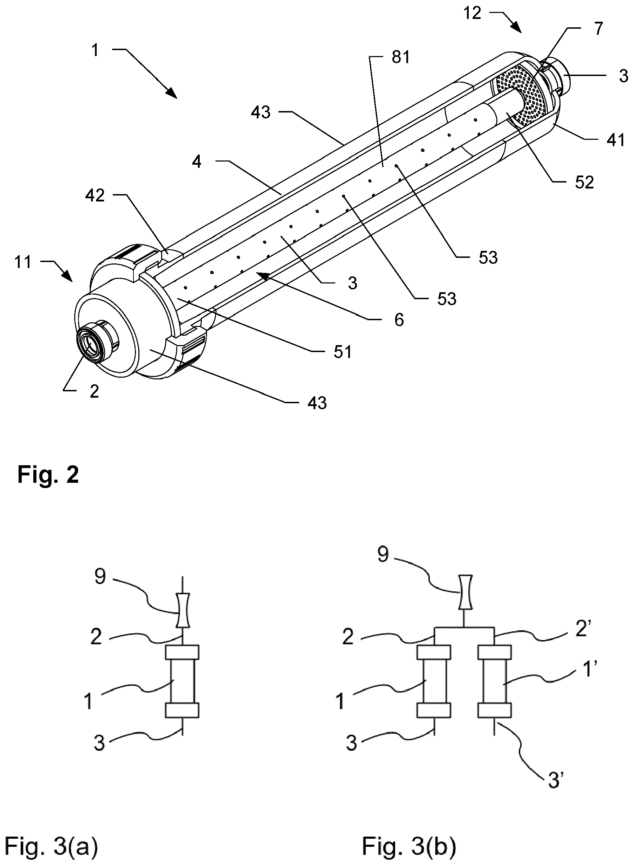

Fig. 1 shows a sectional view of a catalyst device 1 for degrading organic pollutants in water. Fig. 2 shows the catalyst device of Fig. 1 in perspective view with cut-open outer wall.

The catalyst device 1 comprises a fluid inlet 2 at an upper end 11 of the catalyst device 1 for feeding the catalyst device 1 with wastewater and a fluid outlet 3 at a lower end 12 of the catalyst device 1 for discharging treated water. The device 1 further comprises an outer tube 4 forming an outer wall of the device and an inner tube 5, which is arranged concentric within and spaced apart from the outer tube 4. The outer tube 4 has a first end 41 and an opposite second end 42. The inner tube has a first end 51 and an opposite second end 52.

The inner tube 5 forms a first fluid chamber 8, which is fluidly connected to the fluid inlet 2 arranged at the first end 51 of the inner tube 5. The space between the inner tube 5 and the outer tube 4 defines a catalyst chamber 6, which is filled with granular piezoelectric catalyst (not shown). The outer wall of the inner tube 5 is a separating wall 81 separating the first chamber 81 from the catalyst chamber 6. The separating wall 81 is provided with a plurality of through holes 53, which are radially arranged along the inner tube 5. Thus, the inner tube 5 extends along the outer tube 4, such that the plurality of radial through holes are distributed along the length of the catalyst chamber 6. The inner tube 5 is closed at its second end 52.

The through holes 53 may have a diameter in the range of 0.1 to 3 mm and are spaced apart in longitudinal direction of the inner tube 5 by less than 50 mm and/or the radial distance between the inner tube 5 and the outer tube 4 is in the range of 5 to 50 cm. The total number and size of the through holes 53 is such that the ratio of the total cross-sectional area of all through holes to the cross-sectional area of the inner tube is between 0.2 to 2.

The spacing of through holes 53 along the longitudinal direction of the inner tube may be uniform or it may vary such that the spacing between through holes 53 closer to the fluid inlet 2 is larger than the spacing between through holes 53 closer to the fluid outlet 4.

The outer tube 4 and the catalyst chamber 6 are fluidly connected to the fluid outlet 3 arranged at the first end 41 of the outer tube 4. The fluid outlet 3 is opposite of the fluid inlet 2. The outer tube 4 is closed at the second end 42 with a removable cap 43 accommodating the fluid inlet 2 and holding the inner tube 5 centrally within the outer tube 4. Other arrangements are possible as well.

When in use, polluted water is fed through the fluid inlet 2 into the first chamber 8 inside the inner tube 5. From there the water flows through the plurality of through holes 53 in the separating wall 81 (wall of inner tube 5) and is thereby evenly distributed over the entire bed of piezoelectric catalyst. The through holes 53 are designed to obtain a fluid nozzle velocity of 0.5 to 6 m/s at a given flow rate of water through the catalyst device, allowing a turbulent flow of water through the catalyst chamber 6 towards the fluid outlet 3 at the outer tube 4 for activation of the piezoelectric catalyst. Activation of the piezoelectric catalyst then leads to the degradation of the organic pollutants, typically perfluorinated alkyl substances (PFAS), in the polluted water before the water leaves the catalyst device 1 through the fluid outlet 3.

Good results have been obtained with a packing of 50 to 150 grams of piezoelectric catalyst per litre of volume of the catalyst chamber 6. The granular piezoelectric catalyst may have a particle size in the range of 3 to 20 mm and may have a porosity of 50 to 95 % and/or a macroscopic young's modulus of 10 to 500 MPa.

The catalyst chamber 6 is further provided with a perforated retainer plate 7 to hold back the granular piezoelectric catalyst. The retainer plate has the size of the inner diameter of the outer tube 4 and is arranged such that sufficient space is provided between the retainer plate 7 and the fluid outlet 3 to minimize pressure losses.

Fig. 3 shows a schematic diagram of a catalyst device arrangement including means for introducing gas, typically air, into the wastewater before entering the first chamber 8. The means for introducing gas may be a venturi nozzle or venturi injector. The introduction of gas to obtain a gas-water ratio of approx. 0.05 to 0.5 leads to improved activation of the piezoelectric catalyst. The means for introducing gas may be arranged upstream of one single catalyst device 1 (Fig. 3(a)) or upstream of several catalyst devices 1, 1' fluidly arranged in parallel (Fig. 3(b)).

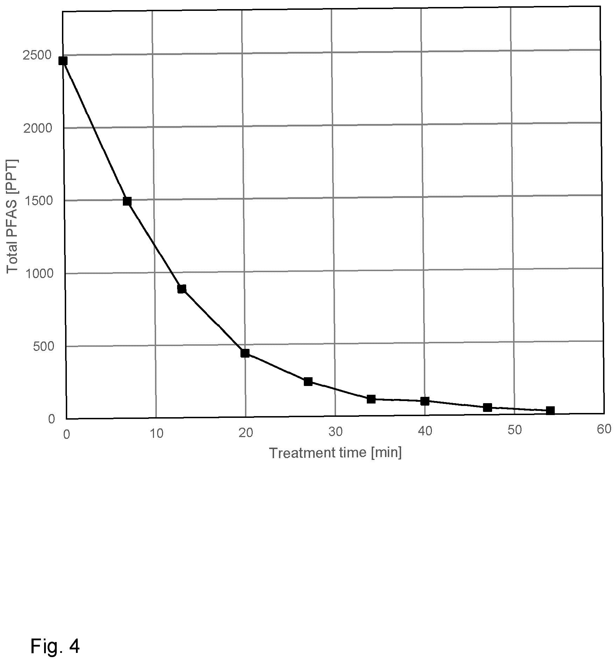

Fig. 4 shows the degradation rate of the treatment of polluted groundwater with a pollutant load of 2500 ng/L PFAS, as demonstrated in an on-site use-case. A fixed volume 230L of polluted water was recirculated through single cartridge, demonstrating removal below 100 ng/L regulatory limit within 40 minutes. Beyond 40 minutes, the PFAS concentration can be lowered even further.

The energy consumption of the process is calculated as follows: E = Q*dP*eta*t / V, where E is the specific energy consumption (kWh/m3), Q is the water recirculation rate (3 m3/h), dP is the pressure drop over the cartridge (100'000Pa), eta the pump efficiency (80%), t the treatment time (40 min) and V the volume of the polluted water (0.23 m3). The resulting specific energy consumption is 0.35 kWh/m3, far surpassing any existing technology on the market.

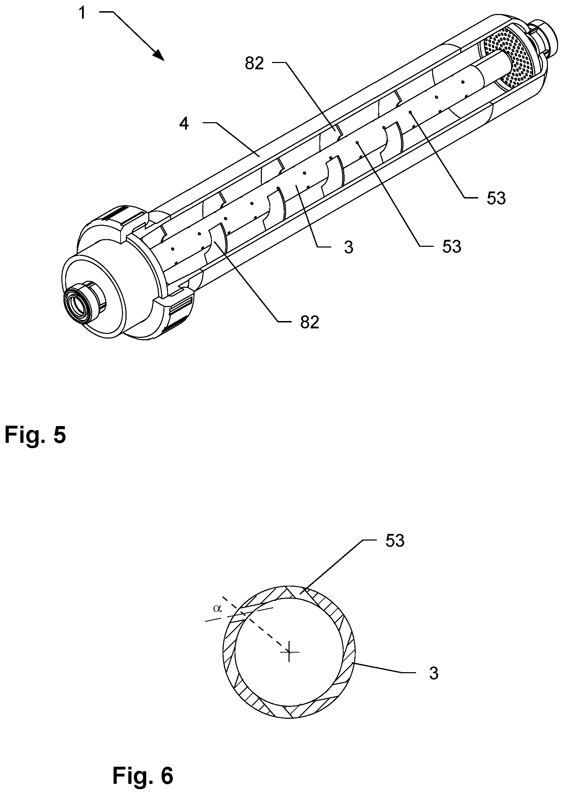

Fig. 5 shows a cross section of an inner tube 3 with several angled through holes 53. The through holes 53 have a longitudinal axis which may be at an angle of 0 to 70 degrees to a perpendicular of the separating wall. In particular angles in the range of 30 to 70 degrees may lead to enhanced catalyst activation. Neighbouring through holes may angled in different direction to create even more turbulence and therefore enhanced activation of the catalyst.

Fig. 6 shows a perspective and partially sectional view of the catalyst device with guide blades 82. The guide blades 82 are arranged within the catalyst chamber to redirect the flow of water. Guide blades 82 may be placed every approx. 30 mm in a longitudinal direction. The guide blades also create more turbulence and thereby enhanced catalyst activation.

### Reference Signs

- 1: catalyst device
- 11: upper end of catalyst device
- 12: lower end of catalyst device
- 2: fluid inlet
- 3: fluid outlet
- 4: outer tube
- 41: first end of outer tube
- 42: second end of inner tube
- 43: cap
- 5: inner tube
- 51: first end of inner tube
- 52: second end of inner tube
- 53: through hole
- 6: catalyst chamber
- 7: retainer plate
- 8: first fluid chamber
- 81: separating wall
- 82: guide blade
- 9: means for introducing gas / venturi nozzle / venturi injector

## Claims

1. Catalyst device (1) for degrading organic pollutants, in particular perfluorinated alkyl substances (PFAS), in water comprising
a fluid inlet (2), a fluid outlet (3),
a first fluid chamber (8) fluidly connected with the fluid inlet (2), and
a catalyst chamber (6) fluidly connected with the fluid outlet (3);
wherein the catalyst chamber (6) is filled with a granular piezoelectric catalyst;
wherein a separating wall (81) provided with a plurality of through holes (53) separates the first fluid chamber and the catalyst chamber (6),
wherein the plurality of through holes (53) are distributed over the separating wall (81) creating a turbulent flow of water through the catalyst chamber (6) towards the fluid outlet (3) for activation of the piezoelectric catalyst.

2. Catalyst device according to claim 1, wherein the catalyst device comprises
an outer tube (4) with a first end (41) and an opposite second end (42) and
an inner tube (5) with a first end (51) and an opposite second end (52);
the inner tube (5) defining the first fluid chamber and being arranged concentric within and spaced apart from the outer tube (4); and
wherein the catalyst chamber (6) is defined by the space between the outer tube (4) and the inner tube (5);
wherein the inner tube (5) extends along the outer tube (4), is closed at the second end (52), and wherein the through holes (53) are radially distributed over the length of the inner tube.

3. Catalyst device according to claim 2, wherein the outer tube (4) is closed at the second end (42) with a removable cap (43) accommodating the fluid inlet (2) and holding the inner tube (5).

4. Catalyst device according to one of the preceding claims, wherein the catalyst chamber (6) includes a perforated retainer plate (7) upstream of the fluid outlet (3) defining a perforated wall of the catalyst chamber (6).

5. Catalyst device according to one of the preceding claims, wherein the through holes are sized to obtain a fluid nozzle velocity of 0.5 to 6 m/s.

6. Catalyst device according to one of the preceding claims, wherein the through holes (53) have a diameter in the range of 0.1 to 3 mm and are spaced apart in longitudinal direction by less than 50 mm and/or the radial distance between the inner tube (5) and the outer tube (4) is in the range of 5 to 50 cm.

7. Catalyst device according to one of claims 2 to 6, wherein the ratio of the total cross-sectional area of all through holes (53) to the cross-sectional area of the inner tube (5) is between 0.2 to 2.

8. Catalyst device according to one of the preceding claims, wherein the piezoelectric catalyst is packed in the catalyst chamber with 50 to 150 grams of piezoelectric catalyst per litre of volume of the catalyst chamber and/or the granular piezoelectric catalyst has a particle size in the range of 3 to 20 mm.

9. Catalyst device according to one of the preceding claims, wherein the piezoelectric catalyst has a porosity of 50 to 95 % and/or a macroscopic young's modulus of 10 to 500 MPa.

10. Catalyst device according to one of the preceding claims, wherein a longitudinal axis of the through holes is at an angle of 0 to 70 degrees to a perpendicular of the separating wall.

11. Catalyst device according to one of the preceding claims, wherein at least one guide blade is arranged within the catalyst chamber to redirect the flow of water.

12. Catalyst device arrangement comprising a catalyst device according to one of the preceding claims and means for introducing gas into the water upstream of the fluid inlet or the first chamber to generate a fluid with a gas-water ratio of 0.05 to 0.8.

13. Catalyst device arrangement according to claim 12, wherein the means for introducing gas are arranged upstream of one single catalyst device or upstream of several catalyst devices fluidly arranged in parallel.

14. Method for degrading organic pollutants, in particular perfluorinated alkyl substances (PFAS), in water using a catalyst device of one of claims 1 to 11, comprising the steps:
a. feeding polluted water through the fluid inlet into the first fluid chamber,
b. evenly distributing the polluted water through the plurality of through holes over the catalyst chamber to generate a turbulent flow towards the fluid outlet for activation of the piezoelectric catalyst,
c. degrading the organic pollutant via the catalytic reaction of the piezoelectric catalyst while the water flows towards the fluid outlet.

15. Method according to claim 14, wherein the water is enriched with gas upstream of the fluid inlet or the first chamber to generate a fluid with a gas-water ratio of 0.05 to 0.8.
